# EUROPEAN PATENT APPLICATION

(11) **EP 4 667 210 A1**
(43) Date of publication of application: **24.12.2025**
(21) Application number: 24183737.6
(22) Date of filing: 21.06.2024
(51) Int. Cl.: B32B 1/08, B32B 5/02, B32B 7/12, B32B 27/08, B32B 27/12, B32B 27/32, B32B 27/34, B60H 1/00, F16L 11/08

(54) **MULTILAYER AIR-CONDITIONING PLASTIC HOSE**

(71) Applicant: Danfoss A/S, 6430 Nordborg (DK)
(72) Inventor: HATHAWAY, Colleen, 6430 Nordborg (DK); WALSH, Brian, 6430 Nordborg (DK); SCHULTZ, Brett William, 6430 Nordborg (DK); CLARK, Aaron, 6430 Nordborg (DK); CLARK, Gina Theresa, 6430 Nordborg (DK); STARK, Jason, 6430 Nordborg (DK)
(74) Representative: Kuhnen & Wacker Patent- und Rechtsanwaltsbüro PartG mbB

(57) **Abstract**

The invention relates to a multilayer air-conditioning plastic hose with a two layer core tube. The innermost layer of the core tube is a first thermoplastic layer made of PA6 or of a polyolefin formulation. The other layer of the core tube is a second thermoplastic layer made of PA66. A protective layer at least partially made of a thermoplastic elastomer material (TPE) forms the outermost layer of the multilayer air-conditioning plastic hose.

## Description

Stationary and mobile air conditioning (AC) systems play a crucial role in maintaining comfortable indoor environments, whether for a private building, in an office, an industrial facility or in a vehicle, e.g. for a car, truck, agriculture, forestry or any other work vehicle. These systems help to regulate temperature, humidity, and air quality. Typically, AC systems comprise an evaporator unit, which is responsible for cooling air. The evaporator unit comprises of a series of grids or "coils" made of copper or aluminium tubing. As warm indoor air passes over these coils, a refrigerant inside absorbs heat from the air, causing the air to cool down. As the refrigerant absorbs heat, it evaporates and turns into gas. This gas is then pumped to a condenser unit serving as a counterpart of the evaporator unit. There, the gas is condensed by releasing heat to the air surrounding the condenser unit. In many applications the condenser coil also comprises copper or aluminium tubing.

A compressor is provided to compress the low-pressure refrigerant gas from the evaporator unit to obtain a high-pressure gas. This process increases the refrigerant's temperature, allowing it to release heat more efficiently in the condenser unit. An expansion valve regulates the flow of refrigerant between the evaporator unit and the condenser unit. It reduces the pressure and temperature of the refrigerant, allowing it to absorb heat in the evaporator unit.

The components of the AC system are connected by lines/tubing. The tubing is carefully insulated to prevent heat exchange with the surrounding environment. The tubing used in air conditioning systems must meet specific requirements, such as durability, flexibility, and resistance to pressure and temperature.

Bent copper or aluminium tubing is widely used due to its heat transfer properties. It's durable, corrosion-resistant, and is used for rigid parts of the tubing. Parts of the tubing which are required be flexible and resistant to kinking, e.g. in applications where movement of the components is involved, are of the mostly formed by hoses.

As a result, mobile and stationary AC systems according to the prior art usually comprise a combination of metal tubing and flexible hoses. This results in a high complexity and variety of the components causing significant costs. A plurality of different pipe bends is available which makes the installation of rigid tubing cumbersome and time-consuming. Often, a specific type of bend has to be selected from the plurality of bends during the installation phase.

It is therefore an objective of the invention to provide a component that can be integrated in a tubing of an AC system, resulting in a lower complexity of the system and in lower production and installation costs. Further, the assembly and installation of the AC system shall be facilitated.

The objective is solved by a multilayer air-conditioning plastic hose according to claim 1. Preferred embodiments are provided in the subclaims dependent thereon.

According to the invention, a multilayer air-conditioning plastic hose with a two layer core tube is provided. The innermost layer of the core tube is a first thermoplastic layer made of PA6 or made of a polyolefin formulation. Preferably, the polyolefin formulation may be PE or PP, e.g. The other layer, the second innermost layer of the core tube is a second thermoplastic layer made of PA66. A protective layer, which is at least partially made of a thermoplastic elastomer material (TPE), forms the outermost layer of the multilayer air-conditioning plastic hose.

Due to the material combination of PA6 in the first thermoplastic layer and PA66 in the second thermoplastic layer, the multilayer plastic hose according to the invention shows a generally flexible behaviour. Therefore, bending of the multilayer plastic hose is possible during installation the hose. Due to the two layer core tube which is surrounded by a protective layer, the multilayer plastic hose is resistant against leakage of fluid contained in the plastic hose, e.g. refrigerant, be it in fluid or gaseous aggregate state.

The combination of PA6 as first, mainly fluid resistant thermoplastic layer and PA66 as a second thermoplastic layer which further enhances the fluid and gas barrier properties, is suitable for use in AC applications, for example. PA6 offers a good chemical compatibility with polyolester (POE) compressor oils and gases such as R1234yf. PA6 possesses a high tensile strength and elasticity and is highly resistant to abrasion and chemicals such as acids and alkalis. Additionally, PA6 is considered to be chemically compatible with gasoline which is a fluid possibly conducted in the plastic hose when used as a fuel hose.

The PA66 layer further increases the fluid and gas permeation resistance of the plastic hose such that fluid is safely encapsuled in the plastic hose, and a reliable and durable hose is provided, which can be used in a wide variety of applications. Further, PA66 provides high mechanical strength, rigidity, good stability under heat and chemical resistance.

The protective layer serves as a resistance or barrier against environmental impacts such as environmental chemicals and UV radiation. Further, as the protective layer is at least partially made from TPE, it enhances the flexibility and deformability of the plastic hose and serves as a kind of sheath to enhance environmental fluid compatibility while maintaining the capability for thermoforming, if desired. The thermoplastic elastomer material (TPE) may be a thermoplastic urethan material (TPU), e.g.

When a plastic hose according to the invention is installed to a technical system, e.g. an AC system, metal tubes can be replaced by flexible, thermoplastic components. Therefore, the plastic hose according to the invention leads to higher installation liberty, a weight reduction, a better fluid sealing with fewer leak points as well as an enhanced flexibility of the system and forgiveness over the entire assembly for installation.

Some or all parts of the plastic hose may be bio-based. Bio-based materials, in particular bio-based polyamides, like bio-based PA6 or bio-based PA66, offer sustainability benefits, comparable performance, and biocompatibility, making them an attractive alternative to conventionally produced polyamides. However, the choice between the conventionally produced and bio-based polyamides may depend on specific application requirements and cost considerations.

The multilayer plastic hose according to the invention may not only be used in AC applications, but also in other technical fields, e.g. to conduct hydraulic fluid, e.g. oil or breaking fluid. Also, gasoline might be contained in the plastic hose, especially when the first, innermost thermoplastic layer of the core tube is made of a polyolefin formulation.

In a preferred embodiment, at least one reinforcement layer made of natural and/or synthetic and/or metal yarns or a composition of such yarns is arranged between the second thermoplastic layer and the protective layer. The reinforcement layer enhances the mechanical strength of the plastic hose. Thus, the plastic hose may be used in mechanically demanding applications, e.g. in truck/work vehicle applications.

Various manufacturing techniques are available for arranging the reinforcement layer between the second thermoplastic layer and the protective layer.

The yarns of the reinforcement layer may be braided or spiral wound around the second thermoplastic layer to form the reinforcement layer. This can be done after forming of the second thermoplastic layer and before surrounding the second thermoplastic layer with the protective layer, for example. The manufacturing of this arrangement of the yarns of the reinforcement layer is known to a person skilled in the relevant art and therefore simple to implement. Because of that, a cost advantage can be achieved.

Additionally or alternatively, a more complex arrangement of the yarns may be provided in order to provide a more sophisticated, stronger mechanical support structure for the plastic hose. E.g., the yarns of the reinforcement layer may form a woven, knitted or leno textile wound spirally around the second thermoplastic layer, wherein the woven, knitted or leno textile is made of natural and/or synthetic and/or metallic yarns or a composition of such materials. The textile may be suitable to unidirectionally support loads acting on the plastic hose. Alternatively the textile may particularly be effective in supporting loads acting in a specific direction, e.g. acting in the longitudinal direction of the plastic hose.

In one embodiment, a bondable TPE layer is arranged around the reinforcement layer as a tie layer for fixing the yarns or textile to the second thermoplastic layer, and the bondable TPE layer is covered by the protective layer. After activating the bonding, e.g., by means of heating of the TPE layer, the tie layer secures the yarns or the textile to the core tube. Therefore, the mechanical strength and the durability of the plastic hose is further enhanced, as the yarns or the textile remains in place, even when the plastic hose undergoes deformation, e.g. during installation or use. Additionally, the bonded TPE layer may improve the fixation of the protective layer to the second thermoplastic layer and to the reinforcement layer.

In a further embodiment of the invention the protective layer may be formed by three coextruded layers, wherein the innermost of the three layers is made of a thermoplastic material and the other two layers are made of thermoplastic elastomer material. Together, the three coextruded layers serve as sheath over the reinforcement layer. The innermost layer, i.e. the layer made from thermoplastic material may serve as a tie layer in order to enhance adhesion of the reinforcement layer to the core tube and/or to enhance adhesion of the outer layers to the reinforcement layer. For this purpose, it is especially advantageous, when the thermoplastic material is a PA-material, for example, PA6. The remaining other layers, i.e. the two outermost layers of the protective layer, made of TPE provide a good temperature resistance in combination with a high environmental compatibility.

Alternatively, the two outermost layers of the protective layer may be made of PA-material, e.g. PA12 and/or PA6. PA-material is particularly suitable, when strict environmental constraints have to be met and the plastic hose shall be thermoformable after manufacturing.

The plastic hose according to the invention may be at least partially thermoformable. Thus, the shape of the plastic hose may be tailored towards the specific installation situation when the plastic hose is installed to a device, e.g. an AC system. Therefore, the plastic hose may be provided as a standard part with standard dimensions and may be shaped before or during installation by means of heating the plastic hose above a specific temperature, pushing the plastic hose into a specific shape and letting the plastic hose cool down again while holding it in the specific shape.

Preferably, the dimensions of the plastic hose, especially the inner diameter and the outer diameter, are designed in a way, such that the plastic hose may be used as a replacement for standard metal tube fittings. E.g. the dimensions of the plastic hose according to the invention may mimic existing AC hoses in order to utilize existing crimp fitting nipples.

To accomplish that, the inner diameter of the first thermoplastic layer may be selected to fit with standardized fittings. E.g., the standardized fittings may be crimp fittings for air conditioning appliances, such as nipples with a stamped socket and flat crimp profile.

The outer diameter of the plastic hose according to the invention may be selected to fit with standardized fittings. E.g., the fittings may be suitable for use in airbrake appliances. The outer dimensions may mimic thermoplastic airbrake designs to aid in thermoformability of the final product.

The plastic hose may be formed to a spiral hose. Similar to the working principle of a coil spring, the spiral shape of the plastic hose in combination with its flexibility allows an effective compensation of pulling movement stretching the plastic hose, wherein inappropriate lengthening of the hose can be avoided. Therefore, damaging of the hose can be avoided even when the material is stretched above a length that would cause critical lengthening and thus plastic deformation of a non-spiral plastic hose.

For example, a plastic hose according to the invention may comprise one of the following layer arrangements, wherein the layers are listed from the inside of the plastic hose to the outside:
A plastic hose may comprise a three layer arrangement comprising PA6 - PA66 Inner Tube - Reinforcement Layer - TPU Protective Layer.

A plastic hose may comprise a four layer arrangement comprising PA6 - PA66 Inner Tube - Reinforcement Layer - Bondable TPE - TPE Protective Layer.

A plastic hose may comprise a five layer arrangement comprising PA6 - PA66 Inner Tube - Reinforcement Layer - PA6 - Bondable TPE or PA6 or PA12 - TPE or PA6 or PA12 Protective Layer.

In the following by the help of the annexed Figures, exemplary embodiments of the plastic hose according to the invention are described. The presented embodiments do not limit the scope of the invention. The Figures show:
- Figure 1: a first embodiment of a plastic hose according to the invention;
- Figure 2: a perspective view of the first embodiment of a plastic hose according to the invention;
- Figure 3: a second embodiment of a plastic hose according to the invention;
- Figure 4: a third embodiment of a plastic hose according to the invention; and
- Figure 5: a perspective view of a further embodiment of a plastic hose according to the invention.

In the Figures same reference numerals are used for same or similar components of different embodiments throughout the description to improve readability.

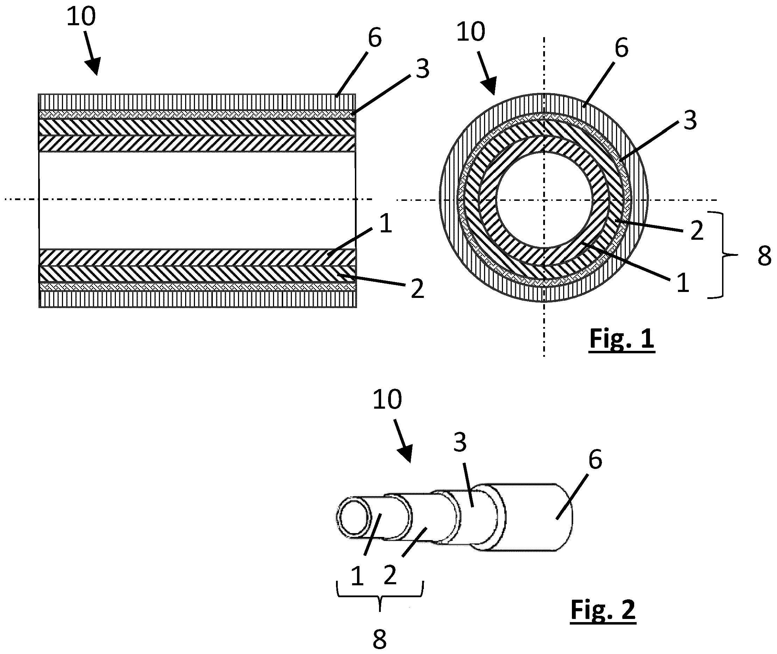

Figure 1 shows a first embodiment of a plastic hose 10 according to the invention in sectional view. Figure 2 shows a perspective view of the first embodiment of a plastic hose 10 according to the invention. The plastic hose 10 comprises a multilayer structure.

The innermost layer is a first thermoplastic layer 1, which is preferably made of PA-material, in particular PA6 material. Alternatively, the first thermoplastic layer 1 may be made of a polyolefin formulation, e.g. PE or PP. The first thermoplastic layer 1 is surrounded by a second thermoplastic layer 2, which is preferably made of PA66. In combination, the first thermoplastic layer 1 and the second thermoplastic layer 2 form a core tube 8 of the plastic hose offering a high resistance against permeation of fluid and of gases.

The mechanical properties of the two materials complement each other well, and both materials are resistant against chemicals, in particular against AC refrigerants.

A reinforcement layer 3 is provided around the second thermoplastic layer 2. The reinforcement layer 3 is made of yarns, e.g., natural and/or synthetic and/or metal yarns. The yarns may be directly arranged, e.g., braided or wound around the second thermoplastic layer 2. In addition or alternatively, a textile may be formed by the yarns prior to arranging the yarns as a reinforcing layer 3 in the plastic hose 10. The formed textile may be wound spirally around the second thermoplastic layer 2, such that the mechanical resistance capabilities of the plastic hose 10 are further increased.

The first thermoplastic layer 1, the second thermoplastic layer 2 and the reinforcement layer 3 are shielded from the environment by a protective layer 6 which is provided as outermost layer of the plastic hose 10. The protective layer 6 may, e.g., be made of thermoplastic material, such as PA6, PA12 or thermoplastic elastomer (TPE) material. For example, thermoplastic urethan (TPU) can be chosen as one specific thermoplastic elastomer. The material of the protective layer 6 preferably has a good adhesion to PA66 and to the reinforcement layer 3 and is resistant against environmental chemicals and UV rays. Therefore, the protective layer 6 protects the inner core tube 8 and the reinforcement layer 3 and chemical disintegration of the inner layers is avoided.

All in all, by using of the provided plastic hose 10 according to the invention in fluid conducting systems, such as AC systems or hydraulic systems, metal tubing can be eliminated and the overall cost of tubing systems can be reduced. The plastic hose 10 can be flexibly assembled, wherein manufacturing and mounting tolerances can be compensated.

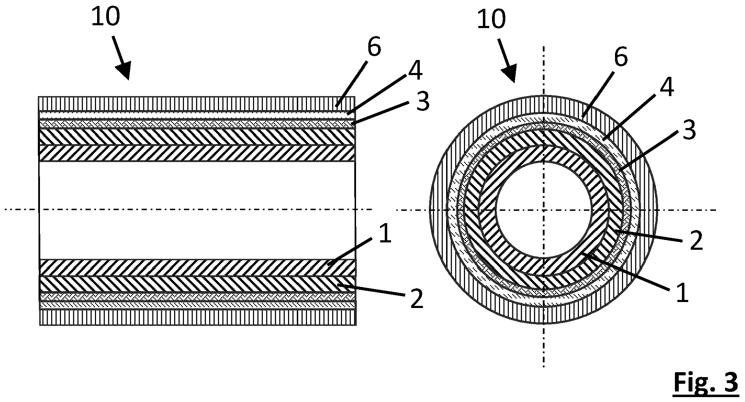

Figure 3 shows a second embodiment of a plastic hose 10 according to the invention. The arrangement of the first thermoplastic layer 1 and the second thermoplastic layer 2 in the core tube 8 and the arrangement of the reinforcement layer 3 is similar to the arrangement in the above-described embodiment. The reinforcement layer 3 is provided around the second thermoplastic layer 2.

A bonded TPE layer 4 is arranged in between the reinforcement layer 3 and the protective layer 6. The bonded TPE layer 4 improves not only the adhesion of the reinforcement layer 3 to the second thermoplastic layer 2, but also improves the adhesion of the protective layer 6 to the reinforcement layer 3 and therewith to the second thermoplastic layer 2. This enhances the durability of the plastic hose 10 as the relative motion between the layers and mechanical wear of the layers can be reduced. Further, the total tension in the plastic hose 10 is distributed over multiple layers, such that the tension acting on a single layer is reduced. The bonded TPE layer 4 provides an additional shield against negative chemical and mechanical influences, which could potentially damage and negatively influence the functionality, in particular the permeation resistance, of the first thermoplastic layer 1 and the second thermoplastic layer 2.

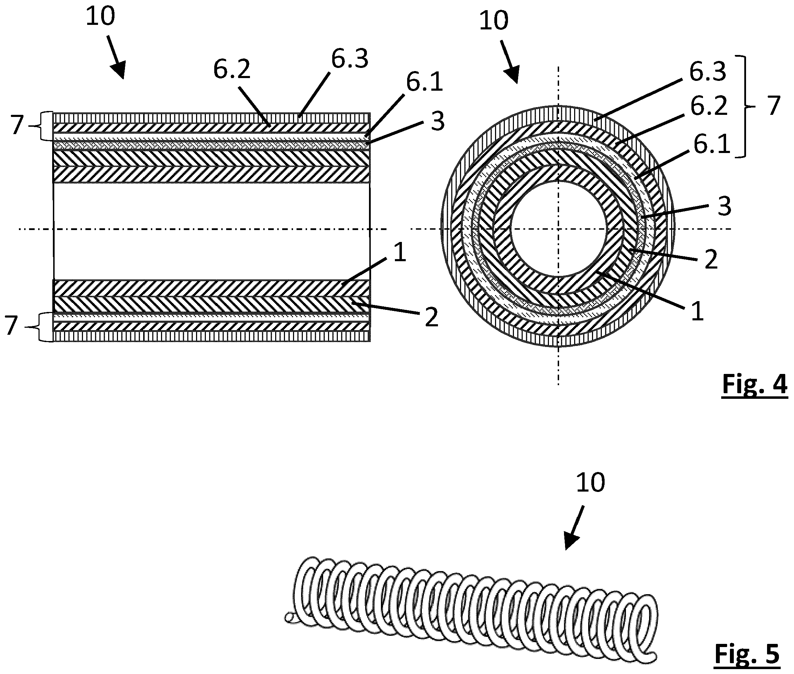

Figure 4 shows a third embodiment of a plastic hose 10 according to the invention. The arrangement of the first thermoplastic layer 1 and the second thermoplastic layer 2 in the core tube is similar to the arrangement in the above-described embodiments. Further, a reinforcement layer 3 is provided around the second thermoplastic layer 2.

The reinforcement layer 3 is surrounded by a co-extruded triple layer 7 serving as protecting layer. The triple layer 7 comprises an innermost layer 6.1, which is made of a thermoplastic material. The other two, outer layers 6.2, 6.3 are made of thermoplastic elastomer material (TPE). For example, a PA material may be used as a tie layer 6.1, in order to improve adhesion of the triple layer 7 to the inner core tube and to the reinforcing layer 3. The two TPE layers 6.2 & 6.3 improve the temperature resistance of the plastic hose 10. Alternatively, two PA layers may be provided as outer layer 6.2 & 6.3, such that the thermoformability of the plastic hose 10 according to the invention is improved.

Figure 5 shows a perspective view of a further embodiment of a plastic hose 10 according to the invention. The plastic hose 10 may comprise any of the above-described layer arrangements and is formed to a spiral hose. The spiral shape of the plastic hose 10 allows a space saving storage of the spiral hose and allows the plastic hose 10 to react to longitudinal loads with an increased elongation, such that severe material damage due to overstretching of the material of the hose 10 can be avoided.

Advantageously, the inner diameter of the first thermoplastic layer 1 and or the outer diameter of the plastic hose 10 according to the invention is selected to fit with standardized fittings, e.g. crimp fittings for air conditioning or airbrake appliances. Further fields of application of a plastic hose 10 according to the invention are generally the transport of liquids or gaseous fluids, such as refrigerant, hydraulic fluid, braking fluid, gasoline, or comparable fluids.

From the above disclosure and accompanying Figures and claims, it will be appreciated that the plastic hose according to the invention offers many possibilities and advantages over the prior art. It will be appreciated further by a person skilled in the relevant art that further modifications and changes known in the art could be made to plastic hose according to the invention without parting from the spirit of this invention. Therefore, all these modifications and changes are within the scope of the claims and covered by them. It should be further understood that the examples and embodiments described above are for illustrative purposes only and that various modifications, changes or combinations of embodiments in the light thereof, which will be suggested to a person skilled in the relevant art, are included in the spirit and purview of this application.

### List of reference numerals

- 1: First thermoplastic layer of core tube /Innermost layer
- 2: Second thermoplastic layer of core tube
- 3: Reinforcement layer
- 4: Layer of thermoplastic material / bondable TPE
- 5: Outer layer
- 6: Protective / Outer layer
6.1 Thermoplastic protective layer
6.2 Thermoelastic protective layer
6.3 Thermoelastic protective layer
- 7: Coextruded triple layer
- 8: Core tube
- 10: Plastic hose

## Claims

1. Multilayer air-conditioning plastic hose (10) with a two layer core tube (8) whose innermost layer is a first thermoplastic layer (1) made of PA6 or of a polyolefin formulation, and whose other layer is a second thermoplastic layer (2) made of PA66, wherein a protective layer (6) at least partially made of a thermoplastic elastomer material (TPE) forms the outermost layer of the multilayer air-conditioning plastic hose (10).

2. Plastic hose (10) according to claim 1, wherein at least one reinforcement layer (3) made of natural and/or synthetic and/or metal yarns or a composition of such yarns is arranged between the second thermoplastic layer (2) and the protective layer (6).

3. Plastic hose (10) according to claim 2, wherein the yarns of the reinforcement layer (3) are braided or spiral wound around the second thermoplastic layer (2) to form the reinforcement layer (3).

4. Plastic hose (10) according to claim 2, wherein the yarns of the reinforcement layer (3) form a woven, knitted or leno textile which is wound spirally around the second thermoplastic layer (2), wherein the woven, knitted or leno textile is made of natural and/or synthetic and/or metallic yarns or a composition of such materials.

5. Plastic hose (10) according to one of the previous claims, wherein a bondable TPE layer (4) is arranged around the reinforcement layer (3) as a tie layer for fixing the yarns or the leno textile of the reinforcement layer (3) to the second thermoplastic layer (2), and wherein the bondable TPE layer (4) is covered by the protective layer (6).

6. Plastic hose (10) according to one of the previous claims, wherein the protective layer (6) is formed by three coextruded layers, wherein the innermost of the three layers (6.1) is made of a thermoplastic material and the other two layers (6.2, 6.3) are made of thermoplastic elastomer material (TPE).

7. Plastic hose (10) according to claim 6, wherein the thermoplastic material is a PA-material.

8. Plastic hose (10) according to one of the previous claims, wherein the inner diameter of the first thermoplastic layer (1) is selected to fit with standardized fittings.

9. Plastic hose (10) according to claim 8, wherein the standardized fittings are crimp fittings for air conditioning appliances.

10. Plastic hose (10) according to one of the previous claims, wherein the outer diameter of the plastic hose (10) is selected to fit with standardized fittings.

11. Plastic hose (10) according to claim 10, wherein the standardized fittings are fittings for airbrake appliances.

12. Plastic hose (10) according to one of the previous claims, wherein the plastic hose (10) is formed to a spiral hose.

13. Plastic hose (10) according to one of the previous claims, wherein the plastic hose (10) is at least partially thermoformable.

14. Plastic hose (10) according to one of the previous claims, wherein the polyolefin formulation of the innermost layer (1) of the core tube (8) is a PE or PP thermoplastic material.
